# EUROPEAN PATENT APPLICATION

(11) **EP 1 569 236 A1**
(43) Date of publication of application: **31.08.2005**
(21) Application number: 05001970.2
(22) Date of filing: 31.01.2005
(51) Int. Cl.: G11B 27/10, G11B 27/32

(54) **DVD reproducing apparatus including language setting apparatus and language setting method executed by DVD reproducing apparatus**

(30) Priority: 27.02.2004 JP 2004053838; 02.03.2004 JP 2004057256
(71) Applicant: Orion Electric Company, LTD., Fukui-ken (JP)
(72) Inventor: Sakon, Toshihiro, Orion Electric Co., Ltd., Takefu-shi Fukui-ken (JP)
(74) Representative: Kirschner, Klaus Dieter

(57) **Abstract**

This invention provides a language setting method and a language setting apparatus capable of easily resetting a subtitle language or voice language to a user's desired language if a DVD player reproduces content data using the subtitle language or the voice language different from the initially set and user's desired language based on a navigation command recorded in a DVD disc. This invention provides a method and an apparatus for automatically resetting a desired language by operating a remote controller key only once when a reproduction language designated by a navigation command of a DVD disc differs from an initially set and user's desired language. This invention also provides a method and an apparatus for displaying the fact that the reproduction language designated by the navigation command recorded in the DVD disc differs from the initially set and user's desired language as an on-screen message, and for automatically resetting the desired language by operating the remote controller key only once.

## Description

The present invention relates to a user selection technique for switchover of voice and subtitle languages in relation to a navigation command during DVD reproduction.

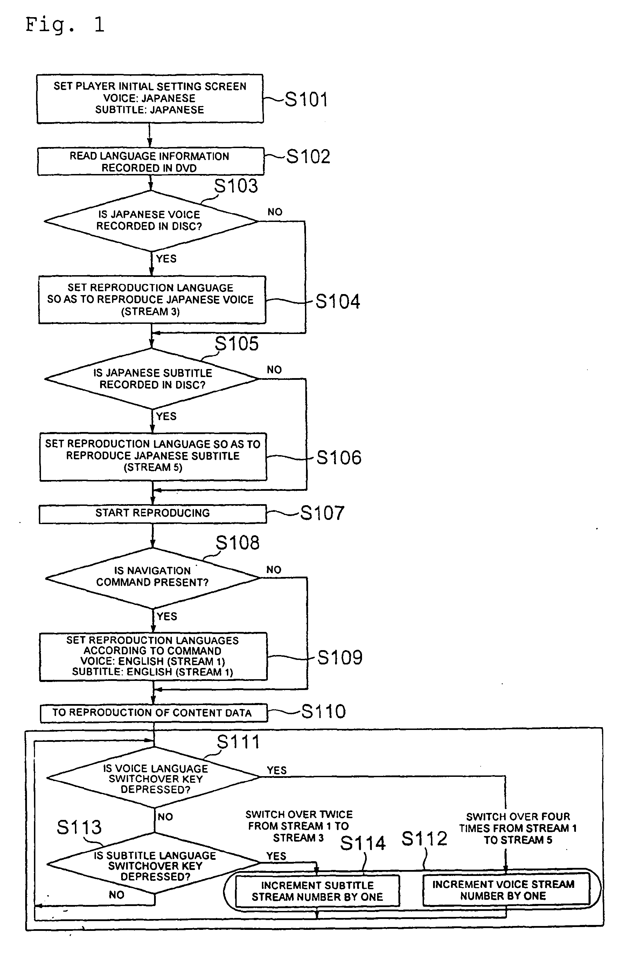

A conventional method for the switchover of voice and subtitle languages will be described with reference to Fig. 1. A user of a DVD player selects desired voice and subtitle languages used when data is reproduced from a DVD on an initial setting screen in advance right after purchase of the DVD player at a step S101. Otherwise, a selection of the voice and subtitle languages is set in advance according to a mother language of a sales target country by a manufacturer of the DVD player by the time of shipping of the DVD player. In either case, initial setting data on the selection of the voice and subtitle languages is stored in a memory included in the DVD player in an initial phase. At the step S101 shown in Fig. 1, it is assumed that both the voice language and the subtitle language are set to Japanese.

At a step S102, when the user inserts a DVD which the user wants to view into the DVD player, the DVD player automatically reads language information recorded in the DVD. It is assumed herein that the language information recorded in the DVD is as shown in Table 1 below.

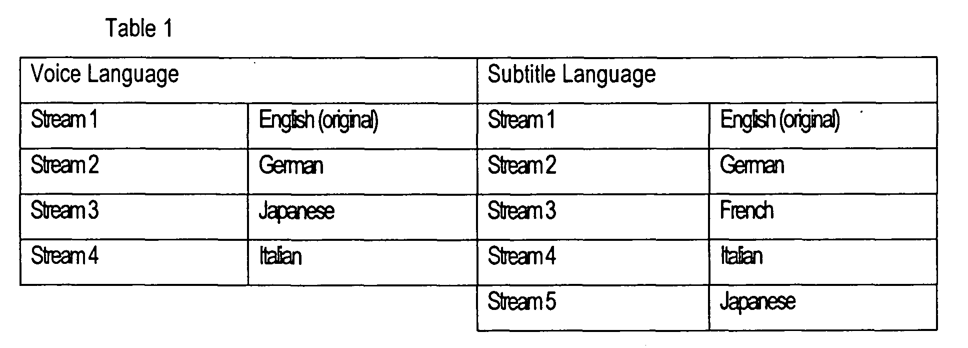

At a step S103, the DVD player automatically selects the voice language initially set (at the step S101), which is Japanese in a stream 3 in this example, as a reproduction voice language before reproducing content data such as video and voice from the DVD. At a step S104, the DVD player sets the Japanese voice as a reproduction language.

At a step S105, the DVD player automatically selects the subtitle language initially set (at the step S101), which is Japanese in a stream 5 in this example, as a reproduction subtitle language. At a step S106, the DVD player sets the Japanese subtitle as a reproduction language.

In this case, at a step S107 of starting reproduction, the DVD player starts reproducing in a state that a voice language and a subtitle language automatically selected and set by the DVD player coincide with the initially set and user's desired languages, respectively. Then navigation data is executed at a step S108 simultaneously with the start of reproducing the content data such as video and voice, so that the DVD player reads a navigation command and automatically executes the command. However, a command to set the reproduction language to a language different from that coincident with the voice language the user previously selects in the phase of the initial setting (at the step S101) or the voice language the manufacturer previously sets in the phase of the shipping of the player, that is, Japanese in this example is sometimes recorded as the navigation command. If so, the DVD player automatically sets the language designated by the navigation command, i.e., English in the stream 1, as the reproduction languages, that is, the reproduction voice language and the reproduced subtitle language, and executes reproducing according to the navigation command at a step S109.

To solve this disadvantage, the user executes a predetermined setting operation for switching over again to the reproduction using the desired voice language on the DVD player that is now reproducing the content data, thereby coping with the disadvantage (at steps S112 and S114).

According to this conventional technique, while the DVD player is reproducing the content data, the voice and the subtitle languages are disadvantageously changed to the voice language different from the user's desired voice language and to the subtitle language different from the user's desired subtitle language against user's intention. To solve this disadvantage, the user is required to perform the setting operation for switching over again to the reproduction using the desired voice language or the desired subtitle language on the DVD player during reproduction, which disadvantageously takes lots of time and labor. Further, the setting operation for switching over again to the desired voice language or the desired subtitle language is required to be executed individually for the voice language and the subtitle language, thereby considerably increasing user's labor. Besides, the switchover operation should be executed according to an order of recorded streams recorded in the DVD. As a result, the switchover operation is required to be performed a plurality of times for each of the voice language and the subtitle language before the DVD player locates the desired language, which is Japanese in the stream 3 for the voice language or Japanese in the stream 5 for the subtitle language in the above-stated example. This disadvantageously gives the user a sense of quite heavy burden (at the steps S112 and S114).

It is an object of the present invention to provide a language setting method for automatically resetting language streams corresponding to initially set and user's desired voice language and subtitle language, respectively, as reproduction language streams.

This object is achieved by a DVD reproducing apparatus including a language setting apparatus and a language setting method executed by the DVD reproducing apparatus as stated in the independant claims. Preferred embodiments of the invention are characterized in the sub-claims.

Resetting language streams corresponding to initially set and user's desired voice language and subtitle language, respectively, as reproduction language streams by user's operating a language setting button such as a dedicated remote controller key only once when a DVD player starts reproducing content data using a voice language different from a user's desired voice language or a subtitle language different from a user's desired subtitle language according to a navigation command recorded in a DVD. It is another object of the present invention to provide a language setting apparatus that executes the language setting method.

It is advantageous that the language setting method includes a function to cause a user to determine whether a navigation command recorded in a DVD can be executed based on an on-screen message when a DVD player selects a voice language different from a user's desired voice language or a subtitle language different from a user's desired subtitle language according to the navigation command. It is, furhtermore, advantageous that the present invention provides a language setting apparatus that executes the language setting method.

According to a first aspect of the present invention, there is provided a DVD reproducing apparatus including a language setting apparatus, the language setting apparatus comprising: initial setting means for initially setting a subtitle language and a voice language to be used for reproduction; language stream read means for reading a plurality of language streams of subtitle languages and a plurality of language streams of voice languages recorded in a DVD media from the DVD media; and language stream selection means for selecting, for the reproduction, one of the plurality of language streams of the subtitle languages and one of the plurality of language streams of the voice languages read by the language stream read means in accordance with the languages initially set by the initial setting means, respectively, wherein the language setting apparatus further includes: storage means for storing information on the language stream of the subtitle language and the language stream of the voice language selected by the language stream selection means; and reproduction language selection means for selecting, for the reproduction, one of the plurality of language streams of the subtitle languages and one of the plurality of language streams of the voice languages read by the language stream read means according to language stream information on the subtitle language and language stream information on the voice language corresponding to the language streams stored by the storage means, respectively.

According to a second aspect of the present invention, there is provided a DVD reproducing apparatus including a language setting apparatus, the language setting apparatus comprising: initial setting means for initially setting a subtitle language and a voice language to be used for reproduction; language stream read means for reading a plurality of language streams of subtitle languages and a plurality of language streams of voice languages recorded in a DVD media from the DVD media; and language stream selection means for selecting, for the reproduction, one of the plurality of language streams of the subtitle languages read by the language stream read means as a first subtitle language stream and one of the plurality of language streams of the voice languages read by the language stream read means as a first voice language stream in accordance with the languages initially set by the initial setting means, wherein the language setting apparatus further includes: navigation command selection means for selecting one of the plurality of language streams of the subtitle languages as a second subtitle language stream, and one of the plurality of language streams of the voice languages as a second voice language stream in response to a navigation command during execution of the navigation command; detection means for detecting that the second subtitle language stream selected by the navigation command selection means differs from the first subtitle language stream selected by the language stream selection means, and for detecting that the second voice language stream selected by the navigation command selection means differs from the first voice language stream selected by the language stream selection means; and inquiry means for inquiring a user whether to select both of or one of the second subtitle language stream and the second voice language stream if the detection means detects both of or one of difference of the second subtitle language stream from the first subtitle language stream and difference of the second voice language stream from the first voice language stream, and wherein if the user does not permit to select both of or one of the second subtitle language stream and the second voice language stream, the language setting apparatus does not execute selection of both of or one of the second subtitle language stream and the second voice language stream.

According to a third aspect of the present invention, there is provided a language setting method executed by a DVD reproducing apparatus, the method comprising: an initial setting step of initially setting a subtitle language and a voice language to be used for reproduction; a language stream read step of reading a plurality of language streams of subtitle languages and a plurality of language streams of voice languages recorded in a DVD media from the DVD media; a language stream selection step of selecting, for the reproduction, one of the plurality of language streams of the subtitle languages and one of the plurality of language streams of the voice languages read at the language stream read step in accordance with the languages initially set at the initial setting step, respectively; a storage step of storing information on the language stream of the subtitle language and the language stream of the voice language selected at the language stream selection step; and a reproduction language selection step of selecting, for the reproduction, one of the plurality of language streams of the subtitle languages and one of the plurality of language streams of the voice languages read at the language stream read step according to language stream information on the subtitle language and language stream information on the voice language corresponding to the language streams stored at the storage step, respectively.

According to a fourth aspect of the present invention, there is provided a language setting method executed by a DVD reproducing apparatus, the method comprising: an initial setting step of initially setting a subtitle language and a voice language to be used for reproduction; a language stream read step of reading a plurality of language streams of subtitle languages and a plurality of language streams of voice languages recorded in a DVD media from the DVD media; a language stream selection step of selecting, for the reproduction, one of the plurality of language streams of the subtitle languages read at the language stream read step as a first subtitle language stream and one of the plurality of language streams of the voice languages read at the language stream read step as a first voice language stream in accordance with the languages initially set at the initial setting step; a navigation command selection step of selecting one of the plurality of language streams of the subtitle languages as a second subtitle language stream, and one of the plurality of language streams of the voice languages as a second voice language stream in response to a navigation command during execution of the navigation command; a detection step of detecting that the second subtitle language stream selected at the navigation command selection step differs from the first subtitle language stream selected at the language stream selection step, and of detecting that the second voice language stream selected at the navigation command selection step differs from the first voice language stream selected at the language stream selection step; and an inquiry step of inquiring a user whether to select both of or one of the second subtitle language stream and the second voice language stream if it is detected at the detection step that there exist both of or one of difference of the second subtitle language stream from the first subtitle language stream and difference of the second voice language stream from the first voice language stream, wherein if the user does not permit to select both of or one of the second subtitle language stream and the second voice language stream, selection of both of or one of the second subtitle language stream and the second voice language stream is not executed.

According to the preferred embodiments of the present invention, even if the DVD player start reproducing content data using the voice language different from the user's desired voice language or the subtitle language different from the user's desired subtitle language according to the navigation command recorded in the DVD, the different voice or subtitle language can be switched over to the initially set and user's desired voice or subtitle language only by user's operating a language setting button such as a dedicated remote controller key only once. This makes it possible to greatly lessen the conventional user's burden accompanying the switchover operation.

Furthermore, the preferred embodiments of the present invention provide a language setting method including a function to cause a user to determine whether a navigation command recorded in a DVD can be executed based on an on-screen message when the DVD player selects a voice language different from a user's desired voice language or a subtitle language different from a user's desired subtitle language according to the navigation command. The present invention further provides a language setting apparatus that executes the language setting method. It is thereby possible to control a forced switchover to a voice language or a subtitle language due to the navigation command, which the user does not desire.

Embodiments of the invention are now described with reference to the drawings in which:
Fig. 1 is a flowchart for a conventional language switchover method;
Fig. 2 is a block diagram that depicts one example of a configuration of a DVD player to which the present invention can be applied;
Fig. 3 is a block diagram that depicts an interior of a microcomputer shown in Fig. 2;
Fig. 4 is a flowchart for a language switchover method according to a first embodiment of the present invention;
Fig. 5 depicts remote controller language setting buttons as an example of language selection means for reproduction according to the first embodiment of the present invention;
Fig. 6 is a flowchart for a language switchover method according to a second embodiment of the present invention; and
Fig. 7 depicts one example of an on-screen display for confirming a language switchover according to the second embodiment of the present invention.

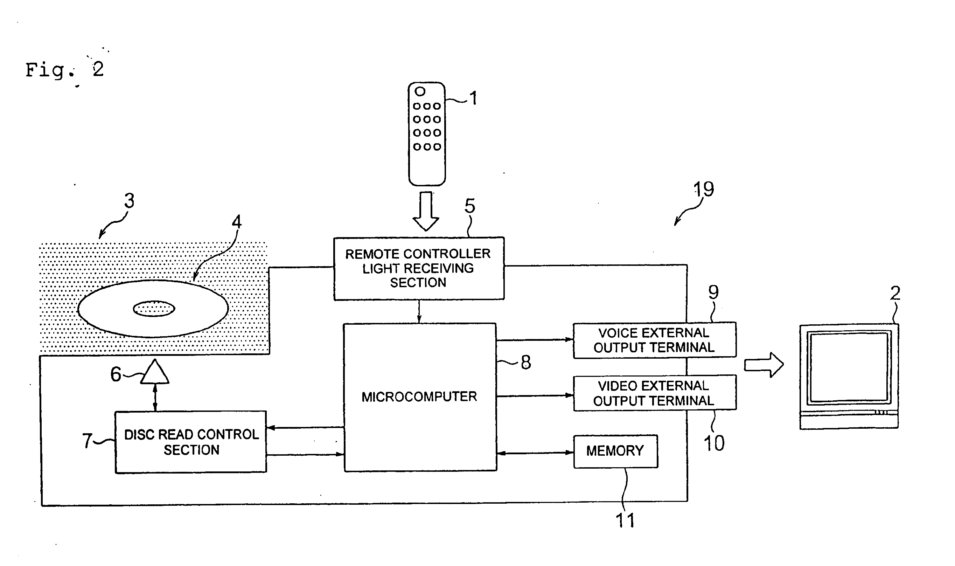

Embodiments of the present invention will be described hereinafter with reference to Figs. 2 to 7. Fig. 2 is a block diagram that depicts one example of an ordinary DVD player to which the present invention can be applied. In Fig. 2, reference symbol 19 denotes a DVD player, 1 denotes a remote controller, and 2 denotes a TV monitor. The DVD player 19 is composed by a tray section 3, a remote controller light receiving section 5, a pickup 6, a disc read control section 7, a microcomputer 8, a voice external output terminal 9, a video external output terminal 10, and a memory 11. Reference symbol 4 denotes a DVD disc inserted into the tray section 3.

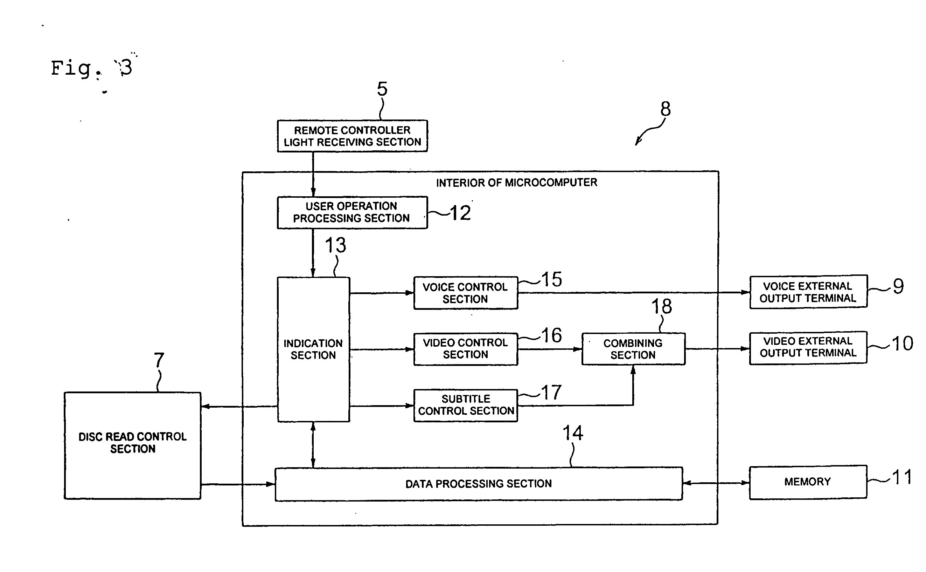

Fig. 3 is a block diagram that depicts an interior of the microcomputer 8 that controls an entire mechanism of the DVD player 19. In Fig. 3, reference symbol 12 denotes a user operation processing section, 13 denotes an indication section, 14 denotes a data processing section, 15 denotes a voice control section, 16 denotes a video control section, 17 denotes a subtitle control section, and 18 denotes a combining section. DVD players 19 according to two embodiments of the present invention will be described specifically.

### FIRST EMBODIMENT

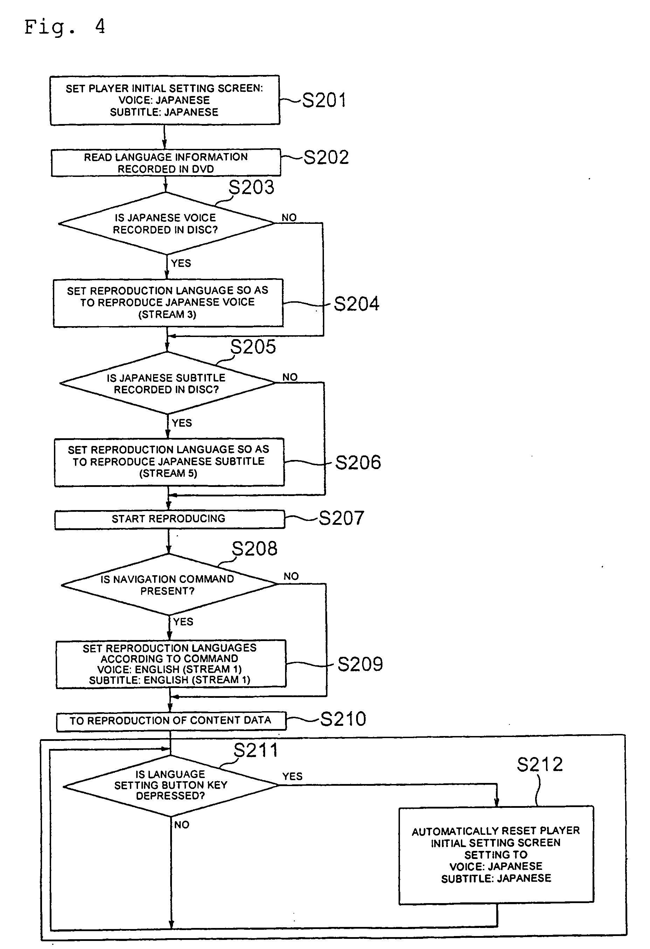

Referring first to a flowchart of Fig. 4, an apparatus and a method that can switch over a voice language different from a user's desired voice language or a subtitle language different from a user's desired subtitle language to the user's desired voice or subtitle language that is initially set by user's operating a language setting button on a dedicated remote controller only once if the DVD player 19 starts reproducing content data using the voice language different from the user's desired voice language or the subtitle language different from the user's desired subtitle language based on a navigation command recorded in the DVD disc 4 will be described.

A user of the DVD player 19 sets the user's desired voice language and the user's desired subtitle language for reproducing the content data from the DVD disc 4 with a remote controller 1 in advance on an initial setting screen right after purchase of the DVD player 19 at a step S201. Initial setting data on language selection for voice and subtitle is stored in the memory 11 included in the DVD player 19 in an initial phase. It is assumed herein that both the user's desired voice language and the user's desired subtitle language are set to Japanese.

At a step S202, when the user inserts the DVD disc 4 into the tray section 3 of the DVD player 19, the indication section 13 indicates the disc read control section 7 to read information recorded in the DVD disc 4. Language information on voice languages and subtitle languages recorded in the DVD disc 4 are composed by a plurality of language streams shown in Table 2 below. It is also assumed as follows. As for the voice languages, an original language of English and a user's desired language of Japanese are arranged in streams 1 and 3, respectively. As for the subtitle languages, an original language of English and a user's desired language of Japanese are arranged in streams 1 and 5, respectively.

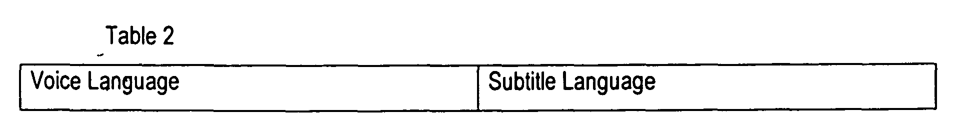

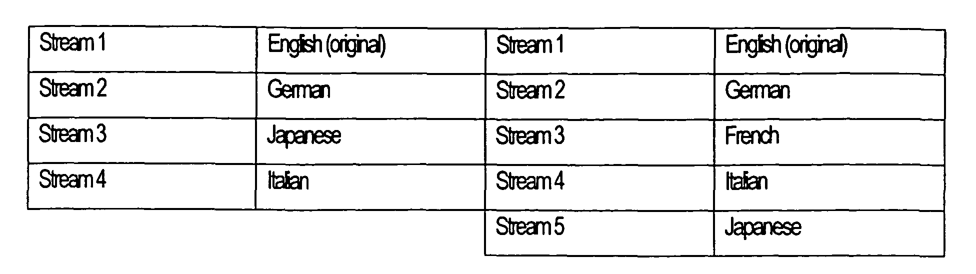

At a step S203, the indication section 13 issues an indication to the data processing section 14 to acquire initial setting data on the voice language recorded in the memory 11 in advance from the memory 11. In addition, the indication section 13 issues an appropriate indication to the voice control section 15 in accordance with the initial setting data on the voice language. In this embodiment, the indication section 13 automatically selects, as a voice language for reproduction (hereinafter, "reproduction voice language"), Japanese in the stream 3 from among streams 1 to 4 of the voice language information previously read from the DVD disc 4 according to Japanese that is the initial setting data on the voice language acquired from the memory 11 at a step S204, and indicates the voice control section 15 to reproduce Japanese voice.

At a step S205, the indication section 13 issues an indication to the data processing section 14 to acquire initial setting data on the subtitle language recorded in the memory 11 in advance from the memory 11. In addition, the indication section 13 issues an appropriate indication to the subtitle control section 17 according to the initial setting data on the subtitle language. In this embodiment, the indication section 13 automatically selects, as a subtitle language for reproduction (hereinafter, "reproduction subtitle language"), Japanese in the stream 5 from among streams 1 to 5 of the subtitle language information previously read from the DVD disc 4 according to Japanese that is the initial setting data on the subtitle language acquired from the memory 11 at a step S206, and indicates the subtitle control section 17 to reproduce Japanese subtitles.

At a step S207, the DVD player 19 starts reproducing content data. At a step S208, the indication section 13 issues an indication to the disc read control section 7 to read information from the DVD disc 4. Further, the indication section 13 issues an indication to the data processing section 14 to store presentation data and navigation data recorded in the DVD disc 4 and read by the disc read control section 7 in the memory 11. In addition, the indication section 13 acquires and analyzes the navigation data stored in the memory 11, and issues appropriate indications to the voice control section 15, the video control section 16, and the subtitle control section 17, respectively.

At a step S209, if the voice language and the subtitle language designated by the navigation command are both set, as initial values of the DVD disc 4 itself, to English in the navigation data, the indication section 13 selects English in the stream 1 corresponding to English, which is the voice language designated by the navigation command, from among the streams 1 to 4 of the voice language information previously read from the DVD disc 4 and stored in the memory 11 in response to execution of the navigation command. In addition, the indication section 13 selects English in the stream 1 corresponding to English, which is the subtitle language designated by the navigation command, from among the streams 1 to 5 of the subtitle language information previously read from the DVD disc 4 and stored in the memory 11 in response to execution of the navigation command. The indication section 13 sets the selected English as the reproduction voice language and the reproduction subtitle language, respectively. At a step S210, the DVD player 19 starts reproducing the content data.

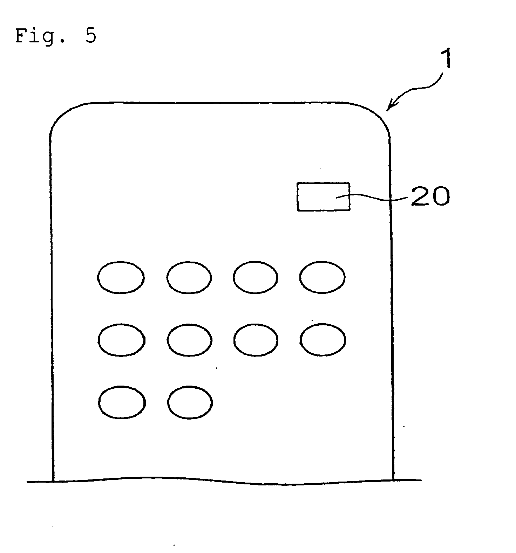

During reproduction of the content data, if the user who recognizes that the content data is reproduced using the voice language different from the initially set and desired voice language or the subtitle language different from the initially set and desired subtitle language, wants to switch over the voice or subtitle language to the initially set and user's desired voice or subtitle language, then the user performs an operation of depressing, for example, a language setting button 20 on the remote controller 1 shown in Fig. 5 once. The user operation processing section 12 thereby decrypts a corresponding signal transmitted from the remote controller 1 and received by the remote controller light receiving section 5, and transmits a result of decryption to the indication section 13 of the microcomputer 8.

At a step S212, the indication section 13 selects a language stream corresponding to the initially set and user's desired voice or subtitle language stored in the memory 11, that is, Japanese in the voice language stream 3 or Japanese in the subtitle language stream 5 in this embodiment, and resets the selected Japanese as the language for reproducing the content data.

Furthermore, the indication section 13 issues a language reset signal to the voice control section 15 or the subtitle control section 17 based on the language stream information reset by the user, whereby the language reset signal is received by the TV monitor 2 through the voice external output terminal 9 or the video external output terminal 10. As a consequence, a language switchover from the voice language stream 1 or the subtitle language stream 1 corresponding to the English language that is the voice or subtitle language currently used for reproduction and set by the navigation command to the voice language stream 3 or the subtitle language stream 5 corresponding to the Japanese language that is the user's desired voice or subtitle language reset at the step S212 is automatically performed.

On the other hand, during the reproduction of the content data, if the user who recognize that the content data is reproduced using the voice language different from the initially set and user's desired voice language or the subtitle language different from the initially set and user's desired subtitle language, does not want to switch over to reproduction using the initially set and user's desired voice or subtitle language, i.e., the user wants to view the content data that is being reproduced in not Japanese which is the user's desired language but English which is the voice language or the subtitle language designated by the navigation command, then the user does not need to perform any operation at all and can continuously view the content data as it is.

### SECOND EMBODIMENT

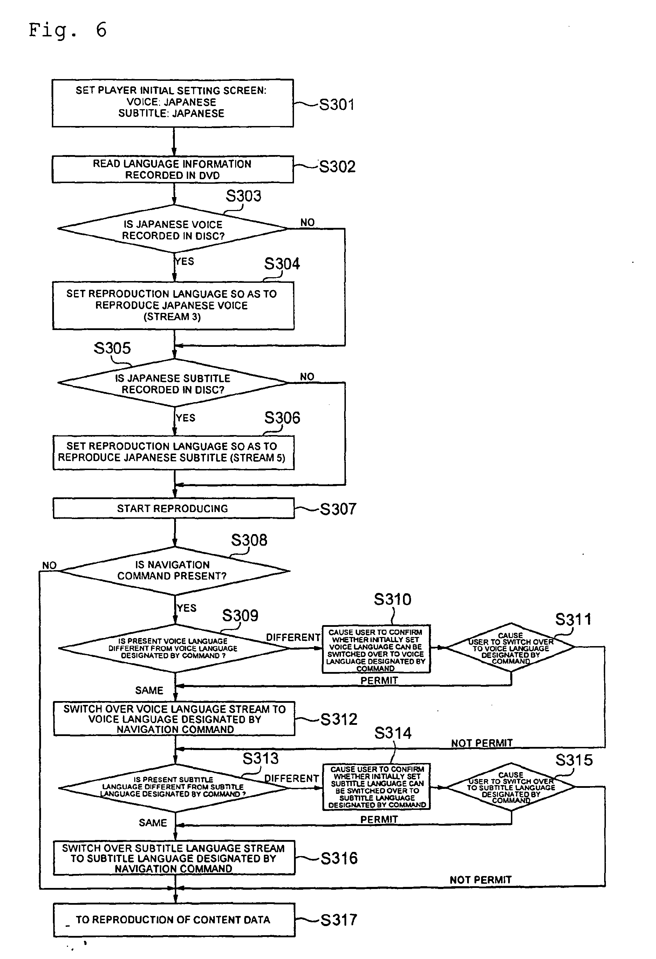

Referring next to a flowchart of Fig. 6, an apparatus and a method that can control a forced switchover to a voice language or a subtitle language which the user does not desire in response to a navigation command recorded in the DVD disc 4 by providing a language setting method that includes a function to cause the user to determine whether to execute the navigation command based on an on-screen message if the DVD player 19 is to select a voice language different from a user's desired voice language or a subtitle language different from a user's desired subtitle language based on the navigation command will be described as a second embodiment of the present invention.

In this embodiment, a step (S301) of initially setting the user's desired voice language and the user's desired subtitle language for reproducing content data from the DVD disc 4, a step (S302) of inserting the DVD disc 4 into the tray section 3 of the DVD player 19, and reading information including a plurality of language streams on voice languages and subtitle languages recorded in the DVD disc 4, steps (S303 to S306) of selecting a language corresponding to the initially set and user's desired voice language or subtitle language from among the plurality of language streams thus read, a step (S307) of starting reproducing the content data using the selected voice or subtitle language, and a step (S308) of acquiring and decrypting navigation data recorded in the DVD disc 4 and issuing an appropriate indication to a DVD reproducing apparatus are completely equal to the steps S201 to S208 in the flowchart of Fig. 4 with reference to which the first embodiment has been described, respectively. These steps will not be, therefore, repeatedly described herein.

Further, in this embodiment, similarly to the first embodiment, it is assumed as follows. The user's desired voice language and the user's desired subtitle language are both set to Japanese initially. The language information on the voice languages and the subtitle languages recorded in the DVD disc 4 is composed by a plurality of language streams shown in the Table 2 above. As for the voice languages, an original language of English and a user's desired language of Japanese are arranged in streams 1 and 3, respectively. As for the subtitle languages, an original language of English and a user's desired language of Japanese are arranged in streams 1 and 5, respectively.

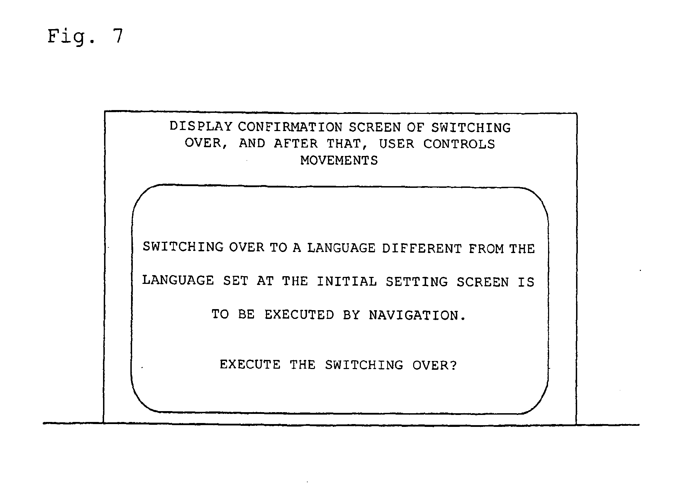

Referring to Fig. 6, at a step S309, if the voice language designated by the navigation command is set, as an initial value of the DVD disc 4 itself, to English in the navigation data, the indication section 13 selects English in the stream 1 corresponding to English, which is the voice language designated by the navigation command, from among the streams 1 to 4 of the voice language information previously read from the DVD disc 4 and stored in the memory 11 in response to execution of the navigation command. In addition, the indication section 13 detects whether a voice language stream corresponding to the voice language designated by the navigation command differs from a voice language stream corresponding to the voice language initially set by the user. If these two voice language streams differ, an on-screen message shown in Fig. 7 is displayed so as to cause the user to confirm whether the initially set voice language can be switched over to the voice language designated by the navigation command, that is, Japanese can be switched over to English in this embodiment at a step S310. If the voice language stream corresponding to the voice language designated by the navigation command coincides with the voice language stream corresponding to the user's initially set voice language or no navigation command for designating the voice language is present, the on-screen message is not displayed.

If the on-screen message shown in Fig. 7 is displayed at the step S310, and a signal indicating an intention to the effect that the user permits the switchover from the user's desired voice language to the voice language designated by the navigation command, i.e., the switchover from Japanese to English in this embodiment is transmitted from the remote controller 1 at a step S311, then the user operation processing section 12 decrypts the signal received by the remote controller light receiving section 5 and transmits a result of the decryption to the indication section 13 of the microcomputer 8. The indication section 13 selects the voice language stream corresponding to the voice language designated by the navigation command in response to the decryption result. In addition, the indication section 13 issues an indication to the voice control section 15 to switch over the voice language which is Japanese initially set as the user's desired language and currently used for reproduction to English in the voice language stream 1 corresponding to the voice language designated by the navigation command. In response to this indication, the voice control section 15 transmits a voice language switchover signal from a voice external output terminal 9 to the TV monitor 2. As a consequence, at a step S312, the voice language is switched over from Japanese in the voice language stream 3 corresponding to the user's initially set voice language to English in the voice language stream 1 corresponding to the voice language designated by the navigation command.

Further, if the on-screen message shown in Fig. 7 is displayed at the step S310, and a signal indicating an intention to the effect that the user does not permit the switchover from the user's desired voice language to the voice language designated by the navigation command, i.e., the switchover from Japanese to English in this embodiment is transmitted from the remote controller 1 at the step S311, then the user operation processing section 12 decrypts the signal received by the remote controller light receiving section 5 and transmits a result of the decryption to the indication section 13 of the microcomputer 8. The indication section 13 does not select the voice language stream corresponding to the voice language designated by the navigation command in response to the decryption result. As a consequence, the voice language currently used for reproduction, i.e., the voice language stream 3 corresponding to Japanese which is the user's initially set voice language is used as it is.

At a step S313, if the subtitle language designated by the navigation command is set, as an initial value of the DVD disc 4 itself, to English in the navigation data, the indication section 13 selects English in the stream 1 corresponding to English, which is the subtitle language designated by the navigation command, from among the streams 1 to 5 of the subtitle language information previously read from the DVD disc 4 and stored in the memory 11 in response to execution of the navigation command. In addition, the indication section 13 detects whether a subtitle language stream corresponding to the subtitle language designated by the navigation command differs from a subtitle language stream corresponding to the subtitle language initially set by the user. If these two subtitle language streams differ, the on-screen message shown in Fig. 7 is displayed so as to cause the user to confirm whether the initially set subtitle language can be switched over to the subtitle language designated by the navigation command, that is, Japanese can be switched over to English in this embodiment at a step S314. If the subtitle language stream corresponding to the subtitle language designated by the navigation command coincides with the subtitle language stream corresponding to the user's initially set subtitle language or no navigation command for designating the subtitle language is present, the on-screen message is not displayed.

If the on-screen message shown in Fig. 7 is displayed at the step S314, and a signal indicating an intention to the effect that the user permits the switchover from the user's desired subtitle language to the subtitle language designated by the navigation command, i.e., the switchover from Japanese to English in this embodiment is transmitted from the remote controller 1 at a step S315, then the user operation processing section 12 decrypts the signal received by the remote controller light receiving section 5 and transmits a result of the decryption to the indication section 13 of the microcomputer 8. The indication section 13 selects the subtitle language stream corresponding to the subtitle language designated by the navigation command in response to the decryption result. In addition, the indication section 13 issues an indication to the subtitle control section 17 to switch over the subtitle language which is Japanese initially set as the user's desired language and currently used for reproduction to English in the subtitle language stream 1 corresponding to the subtitle language designated by the navigation command. In response to this indication, the subtitle control section 17 transmits a subtitle language switchover signal from a video external output terminal 10 via a combining section 18 to the TV monitor 2. As a consequence, at a step S316, the subtitle language is switched over from Japanese in the subtitle language stream 5 corresponding to the user's initially set subtitle language to English in the subtitle language stream 1 corresponding to the subtitle language designated by the navigation command.

Further, if the on-screen message shown in Fig. 7 is displayed at the step S314, and a signal indicating an intention to the effect that the user does not permit the switchover from the user's desired subtitle language to the subtitle language designated by the navigation command, i.e., the switchover from Japanese to English in this embodiment is transmitted from the remote controller 1 at the step S315, then the user operation processing section 12 decrypts the signal received by the remote controller light receiving section 5 and transmits a result of the decryption to the indication section 13 of the microcomputer 8. The indication section 13 does not select the subtitle language stream corresponding to the subtitle language designated by the navigation command in response to the decryption result. As a consequence, the subtitle language currently used for reproduction, i.e., the subtitle language stream 5 corresponding to Japanese which is the user's initially set subtitle language is used as it is.

The first and the second embodiments have been described on assumption that settings of the desired voice language and the desired subtitle language are made by user's initial settings. Normally, however, the voice and subtitle languages are set to the mother language of the sales target country by the DVD player manufacturer by the time of shipping of the DVD player. In many cases, therefore, it is unnecessary to execute the steps of executing user's initial settings of the languages.

## Claims

1. A DVD reproducing apparatus including a language setting apparatus, the language setting apparatus comprising:
initial setting means for initially setting a subtitle language and a voice language to be used for reproduction;
language stream read means for reading a plurality of language streams of subtitle languages and a plurality of language streams of voice languages recorded in a DVD media from the DVD media; and
language stream selection means for selecting, for the reproduction, one of the plurality of language streams of the subtitle languages and one of the plurality of language streams of the voice languages read by said language stream read means in accordance with the languages initially set by said initial setting means, respectively, wherein
said language setting apparatus further includes:
storage means for storing information on the language stream of the subtitle language and information on the language stream of the voice language selected by said language stream selection means; and
reproduction language selection means for selecting, for the reproduction, one of the plurality of language streams of said subtitle languages and one of the plurality of language streams of said voice languages read by said language stream read means according to language stream information on the subtitle language and language stream information on the voice language corresponding to the language streams stored by said storage means, respectively.

2. A DVD reproducing apparatus including a language setting apparatus, the language setting apparatus comprising:
initial setting means for initially setting a subtitle language and a voice language to be used for reproduction;
language stream read means for reading a plurality of language streams of subtitle languages and a plurality of language streams of voice languages recorded in a DVD media from the DVD media; and
language stream selection means for selecting, for the reproduction, one of the plurality of language streams of the subtitle languages read by said language stream read means as a first subtitle language stream and one of the plurality of language streams of the voice languages read by said language stream read means as a first voice language stream in accordance with the languages initially set by said initial setting means, respectively, wherein
said language setting apparatus further includes:
navigation command selection means for selecting one of the plurality of language streams of the subtitle languages as a second subtitle language stream, and one of the plurality of language streams of the voice languages as a second voice language stream in response to a navigation command during execution of the navigation command;
detection means for detecting that the second subtitle language stream selected by said navigation command selection means differs from the first subtitle language stream selected by said language stream selection means, and for detecting that the second voice language stream selected by said navigation command selection means differs from the first voice language stream selected by said language stream selection means; and
inquiry means for inquiring a user whether to select both of or one of the second subtitle language stream and the second voice language stream if said detection means detects both of or one of difference of said second subtitle language stream from said first subtitle language stream and difference of said second voice language stream from said first voice language stream, and wherein
if the user does not permit to select both of or one of the second subtitle language stream and the second voice language stream, the language setting apparatus does not execute selection of both of or one of the second subtitle language stream and the second voice language stream.

3. A language setting method executed by a DVD reproducing apparatus, the method comprising:
an initial setting step of initially setting a subtitle language and a voice language to be used for reproduction;
a language stream read step of reading a plurality of language streams of subtitle languages and a plurality of language streams of voice languages recorded in a DVD media from the DVD media;
a language stream selection step of selecting, for the reproduction, one of the plurality of language streams of the subtitle languages and one of the plurality of language streams of the voice languages read at said language stream read step in accordance with the languages initially set at said initial setting step, respectively;
a storage step of storing information on the language stream of the subtitle language and information on the language stream of the voice language selected at said language stream selection step; and
a reproduction language selection step of selecting, for the reproduction, one of the plurality of language streams of said subtitle languages and one of the plurality of language streams of said voice languages read at said language stream read step according to language stream information on the subtitle language and language stream information on the voice language corresponding to the language streams stored at said storage step, respectively.

4. A language setting method executed by a DVD reproducing apparatus, the method comprising:
an initial setting step of initially setting a subtitle language and a voice language to be used for reproduction;
a language stream read step of reading a plurality of language streams of subtitle languages and a plurality of language streams of voice languages recorded in a DVD media from the DVD media;
a language stream selection step of selecting, for the reproduction, one of the plurality of language streams of the subtitle languages read at said language stream read step as a first subtitle language stream and one of the plurality of language streams of the voice languages read at said language stream read step as a first voice language stream in accordance with the languages initially set at said initial setting step, respectively;
a navigation command selection step of selecting one of the plurality of language streams of the subtitle languages as a second subtitle language stream, and one of the plurality of language streams of the voice languages as a second voice language stream in response to a navigation command during execution of the navigation command;
a detection step of detecting that the second subtitle language stream selected at said navigation command selection step differs from the first subtitle language stream selected at said language stream selection step, and of detecting that the second voice language stream selected at said navigation command selection step differs from the first voice language stream selected at said language stream selection step; and
an inquiry step of inquiring a user whether to select both of or one of the second subtitle language stream and the second voice language stream if it is detected at said detection step that there exist both of or one of difference of said second subtitle language stream from said first subtitle language stream and difference of said second voice language stream from said first voice language stream, wherein
if the user does not permit to select both of or one of the second subtitle language stream and the second voice language stream, selection of both of or one of the second subtitle language stream and the second voice language stream is not executed.
